(19) Europäisches Patentamt
European Patent Office
Office européen des brevets

(11) **EP 2 620 311 A1**

(12) **EUROPEAN PATENT APPLICATION**

(43) Date of publication:
**31.07.2013 Bulletin 2013/31**

(51) Int Cl.:
**B60K 17/16** (2006.01)    **F16D 11/14** (2006.01)
**F16H 3/64** (2006.01)

(21) Application number: **12153031.5**

(22) Date of filing: **30.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **FPT Industrial S.p.A.**<br>**10156 Torino (IT)** | (72) Inventors:<br>• **Rossia, Giorgio**<br> **10141 Torino (IT)**<br>• **Colacito, Emanuele**<br> **65126 PESCARA (IT)**<br><br>(74) Representative: **Cinquantini, Bruno et al**<br>**Notarbartolo & Gervasi S.p.A.**<br>**Corso di Porta Vittoria, 9**<br>**20122 Milano (IT)** |

(54) **Drive axle assembly for a heavy industrial vehicle and heavy industrial vehicle comprising such drive axle assembly**

(57) The present invention relates to a drive axle assembly for an industrial vehicle comprising a support structure containing a differential. The unit comprises a first axle shaft (10') connected to a first driven shaft (9') of the differential by means of a reduction gear (20') and a axle shaft (10') connected to a second driven shaft (9") of the differential by means of a second reduction gear (20"). Such reduction gears (20',20") are configured in order to take at least a first operating condition and a second operating condition wherein they respectively actuate or do not actuate a speed reduction.

Fig. 1

## Description

## FIELD OF THE INVENTION

The present invention belongs to the field of the production of heavy industrial vehicles. More precisely the invention relates to a drive axle assembly for a heavy industrial vehicle. The present invention relates also to a heavy industrial vehicle comprising such drive axle assembly.

## DESCRIPTION OF THE PRIOR ART

In the field of vehicles used for the carriage of goods, an important category of vehicles is represented by "heavy" industrial vehicles, namely vehicles that are designed to bear a particularly heavy workload. One of the main parameters having influence on the choice of these vehicles is the type of road they will be travelling on. As it is known, indeed, heavy vehicles may travel "on-road", namely on roads and highways, or "off-road", namely on gravel or unsurfaced roads. Depending on the different cases, the vehicles adopt different solutions for the transmission from the engine to the pairs of driving wheels. This, of course, results in a different performance of the vehicle in terms of speed, traction and fuel consumption.

In general, every heavy industrial vehicle comprises a driveline that connects the output of the vehicle engine to one or more drive axle assemblies comprising the two axle shafts that support corresponding driving wheels. Each drive axle assembly traditionally comprises a central body within which a differential assembly is placed and is provided with two driven axles, each one of them is connected to one of the two axle shafts. Traditionally, the differential comprises a driving element, generally in the form of a bevel wheel, connected to the vehicle engine by a transmission.

Heavy vehicles designed to travel on-road are generally provided with two or more wheel pairs, only one pair of which being driving. This means that they include only one drive axle assembly as described above. In case, for example, of a 6x2 on-road vehicle, three pairs of wheels are present (6 wheels), only one pair of which being driving (2 wheels). This kind of vehicle typically comprises a front axle, a rear drive axle assembly and a further axle that may be front or middle depending on the different cases. In the case, instead, of a 8x2 heavy vehicle, two front axles, a drive axle assembly and a further axle are present.

In general "on-road" industrial vehicles have only one drive axle assembly, since these vehicles are required to have an optimal performance in terms of speed and of fuel consumption but not in terms of available traction. On the contrary, heavy vehicles designed to be used "off-road" should have an optimal performance in terms of traction. For this reason, such vehicles have two or more drive axle assemblies, possibly provided with a reduction gear in correspondence of the driving wheels, in order to increase the torque available to the wheels themselves. Off-road vehicles may be, for example, of the 6x4 type, namely they can be equipped with 6 wheels, 4 of which being driving wheels driven by two drive axle assemblies.

In some cases such vehicles comprise a pair of reduction gears, each one of them placed between a driving wheel and the end of the corresponding axle shaft to which the wheel itself is splined. Vehicles provided with such technical solution are perfect for travelling off-road, but they are too expensive if used on-road, above all in terms of efficiency and fuel consumption, since the presence of a higher number of drive axle assemblies remarkably increases the tare of the vehicle.

In various situations, however, heavy industrial vehicles are frequently used both off-road and on-road. A first example is represented by the vehicles used for transporting raw materials such as excavation earth, aggregates, plaster, porphyry, marble etc. In this case, the material is loaded in building yards or quarries, thus the vehicle has to travel on off-road routes. Such routes are often uneven and in many cases they are characterized by steep slopes. The load is then transported to its destination mostly on an "on-road" route, namely on roads and/or on highways. A second example of "mixed" usage (namely partly off-road, partly on-road) is represented by the vehicles used for garbage collection and garbage discharging. In this case the garbage collection takes place in urban area (thus "on-road"), while the discharge takes place in waste disposal sites that in most cases can be reached only by means of unsurfaced roads (thus "off-road"). Furthermore, another example of "mixed" usage is represented by vehicles for loading and transporting agricultural products, especially in large landed estates, such as for example American or African plantations.

It has been observed that the current solutions for the transport on "mixed" routes are not satisfactory at all. At present, indeed, when the "mixed" routes are mostly "on-road", the choice is usually oriented toward lighter vehicles (e.g. 4x2) being aware that the respective drive axle assembly will need to be changed after a reduced number of kilometers. On the contrary, if the "mixed" routes are mostly "off-road", then vehicles that are suitable for these routes are chosen. Thus in this case a more expensive vehicle is preferred, also in terms of fuel consumption, to the advantage of a longer life of the drive axle assembly, namely of a reduced maintenance.

In any case, however, the heavy industrial vehicles that are currently on the market are not versatile enough, namely they cannot ensure good speed and low fuel consumption when they are used on-road, and an optimal traction when they are used off-road. It is thus evident the need for alternative technical solutions which allow to overcome this current limit, namely which increase the versatility of an industrial vehicle allowing their effective usage (in terms of speed, fuel consumption and torque) both on-road and off-road.

## SUMMARY OF THE INVENTION

The main task of the present invention is to provide a drive axle assembly for a heavy industrial vehicle which allows to obtain a higher functional versatility than the one obtained by the heavy industrial vehicles of the type known in the art. In the field of this task, a first aim of the present invention is to provide a drive axle assembly for an industrial vehicle which is suitable to travel both on roads and highways (on-road) and on unsurfaced and/or uneven grounds (off-road). Another aim of the present invention is to provide a drive axle assembly for industrial vehicle which allows an optimal performance in terms of traction, when the vehicle is used off-road, and an optimal efficiency in terms of speed and fuel consumption when the vehicle is used on-road.

A further aim of the present invention is to provide a drive axle assembly for an industrial vehicle which is efficient and easy to manufacture at competitive costs.

This task and these aims are achieved by a drive axle assembly for an industrial vehicle according to what stated in Claim 1.

According to the present invention the drive axle assembly is thus equipped, for each axle shaft and downstream of the differential, with a reduction gear that can be switched from a first operating condition, wherein it actually performs a reduction of the speed, and a second operating condition wherein such reduction is not performed. According to the invention such reduction gears may be activated/deactivated depending on the conditions of the road the vehicle travels on. When the vehicle has to travel "on-road", the reduction gears may be advantageously deactivated in order to ensure a higher speed with lower fuel consumption. On the contrary, when the vehicle travels "off-road", the reduction gears may be activated in order to advantageously improve the torque to the driving wheels, namely in order to advantageously increase the traction available to the vehicle.

## LIST OF THE FIGURES

Further characteristics and advantages will become more evident from the following detailed description of embodiments of a drive axle assembly for an industrial vehicle according to the present invention, that is shown in a merely illustrative and not limitative form in the attached drawings wherein:

- Figure 1 shows a section view of a drive axle assembly according to the present invention;
- Figures 2 and 3 show schematizations of a possible embodiment of a reduction gear and of means for switching the operating condition of such reduction gear of a drive axle assembly according to the present invention;
- Figure 4 shows a first enlarged view of a reduction gear of the drive axle assembly of figure 1;
- Figure 5 shows a second enlarged view of a reduction gear of the drive axle assembly of figure 1;
- Figure 6 shows the diagram relating to activation means of the operating condition of the reduction gears of a seal unit according to the present invention;
- figure 7 shows a table comparing the values of the gear ratios that can be obtained by means of two drive axle assemblies of the type known in the art and by means of a drive axle assembly according to the present invention.

## DETAILED DESCRIPTION OF THE INVENTION

With reference to the aforementioned figures, the present invention thus relates to a drive axle assembly 1 for a heavy industrial vehicle intended to be used both on-road (namely on roads or on highways) and off-road. The drive axle assembly 1 comprises a central body 5 within which a differential assembly 6 is placed (in the following also indicated by "differential 6") having a structure and a function per se known. Such differential 6, described in more detail below, comprises a mechanical transmission driving element 8, suitable to be operatively connected to the engine of the industrial vehicle. The expression "driving element 8" indicates the element of the differential 6 that receives the driving torque from the vehicle engine and transmits it to the other components of the differential. The differential 6 comprises also a first driven shaft 9' and a second driven shaft 9" intended to be connected respectively to a first axle shaft 10' and to a second axle shaft 10". From the point of view of the transmission, the driving element 8 substantially represents the input element of the motion in the differential 6, while the two driven shafts 9',9" represent the output of the motion of the differential.

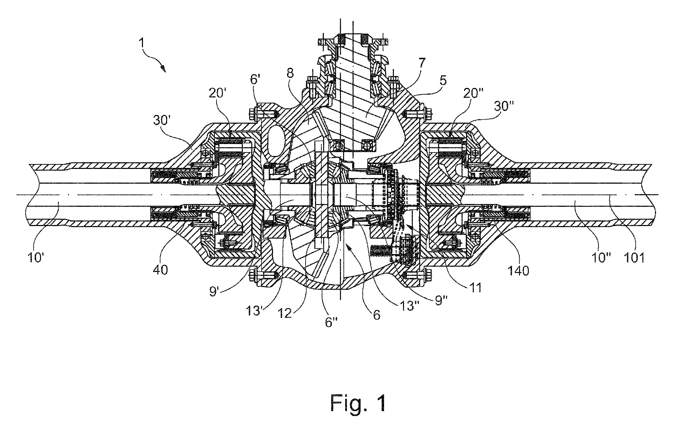

The two axle shafts 10', 10" are arranged so that their axis are aligned along a transversal direction 101 (indicated in Figure 1). In the following such direction will be indicated also as axis 101 of the drive axle assembly 1. Each axle shaft 10',10" is intended to transmit the motion to one or more wheels of the industrial vehicle on which the drive axle assembly 1 is mounted.

The drive axle assembly 1 according to the invention, comprises a pair of reduction gears 20', 20" each one of them being operatively placed between one of the driven shafts 9', 9" of the differential and its corresponding axle shaft 10',10". In practice each reduction gear 20', 20" operatively connects one of the two outputs of the differential 6 to a corresponding axle shaft 10',10". More precisely, a first reduction gear 20' is operatively placed between the first driven shaft 9' and the first axle shaft 10', while a second reduction gear 20" is operatively placed between the second driven shaft 9" and the second axle shaft 10". Unlike the traditional solutions, from the point of view of the transmission, the drive axle assembly 1 comprises, for each axle shaft, a reduction gear 20',20" which is placed downstream of the differential 6 and upstream of the corresponding axle shaft 10', 10".

Always according to the present invention, each reduction gear 20',20" is suitable to have a first operating condition wherein it defines a first (reduction) gear ratio higher than 1, namely such that the speed of rotation of the corresponding axle shaft 10', 10" is lower than the one of the corresponding driven shaft 9', 9". Such first condition substantially corresponds to an "activation" condition of the reduction gear 20', 20". Thus in the first operating condition the reduction gear 20',20" is actively inserted in the transmission.

Each reduction gear 20', 20" is also suitable to have a second operating condition wherein it defines a second gear ratio such that the speed of rotation of the axle shaft 10', 10" is higher than or equal to the one of the corresponding driven shaft 9', 9". Preferably such second gear ratio is equal to 1, namely it is such that the speed of rotation of the corresponding axle shaft 10',10" is equal to the one of the corresponding driven shaft 9', 9". The second operating condition substantially corresponds to a "deactivation" condition of the reduction gear 20', 20". In practice, in the second operating conditions, the reduction gears 20', 20" do not perform any speed reduction and are thus passively (or inertly) inserted in the transmission. According to the present invention, the drive axle assembly 1 comprises also switching means of the operating condition of the reduction gears 20', 20". Such means allow to switch the operating condition of the reduction gears 20',20" from the first operating condition of "activation" (wherein the speed of the corresponding axle shaft 10',10" is actually reduced) to the second operating condition of "deactivation" (wherein no speed reduction is actually performed) and vice versa.

The drive axle assembly 1 according to the invention allows the industrial vehicle where it is mounted to obtain an optimal performance both on-road and off-road. In fact, a variation of the operating condition of the reduction gears 20', 20" results in a variation of the torque available to the wheels mounted at the free end of the two axle shafts 10', 10". In particular, when travelling off-road, the switching means allow to switch the reduction gears 20',20" to the "activation" condition so that they can reduce the speed of rotation of the axle shafts 10', 10". Such reduction results in a higher torque available to the wheels of the vehicle and thus in a higher traction provided by the vehicle itself. On the contrary, when travelling on-road, where a higher speed is required, the reduction gears 20', 20" may be advantageously switched to the "deactivation" condition in order to reduce the torque available to the wheels to the advantage of a higher speed of rotation of the axle shafts 10', 10".

Figure 1 shows a section view of a drive axle assembly 1 according to the present invention. As shown above, the support structure of the drive axle assembly 1 comprises a first containment arm 30' connected to a first side of the body 5 and suitable to contain the first axle shaft 10' and the first reduction gear 20'. The first drive axle assembly 1 comprises also a second containment arm 30" which is connected to a second side of the body 5 opposite to the first side. Such second arm 30", analogously to the first arm 30', is hollow so that it can contain the second axle shaft 10" and the second reduction gear 20". The body 5 and the two arms 30', 30" indicated above substantially form the containment "fixed structure" of the drive axle assembly 1 which houses all the components allowing the mechanical transmission from the reduction gear 6 to the two axle shafts 10', 10". According to the invention, also the switching means of the operating condition of the reduction gears 20', 20" are advantageously placed within the two arms 30',30" indicated above.

Always with reference to figure 1, the driving element 8 of the differential assembly 6 is defined by a hypoid gear (indicated by reference 8) coaxial with the transversal alignment direction 101 of the two axle shafts 10', 10". The hypoid gear 8 meshes, within the body 5, with a pinion 7 intended to be operatively connected to a propeller shaft (not shown) which in its turn is driven by the "power unit" of the industrial vehicle which indicates the unit formed by the engine and the transmission, manual or automatic, of the vehicle itself.

According to a principle per se known, the hypoid wheel 8 and the pinion 7 are structured and dimensioned in order to perform a speed reduction in any operating condition of the vehicle, namely so that the speed of rotation of the hypoid wheel 8 is lower than the speed of rotation of the pinion 7. According to a solution per se known, the differential assembly 6 comprises a first planet gear 6' and a second planet gear 6" both splined on a central pin 12 integral with the hypoid wheel 8 so that the rotation of the hypoid wheel 8 results in a corresponding rotation of the central pin 12 around an axis of rotation corresponding to the one of the hypoid wheel 8 itself, namely coinciding with the axis 101 of the drive axle assembly.

The differential 6 comprises also a first side gear 13' integral with the first driven shaft 9' and a second side gear 13" integral with the second driven shaft 9". The two side gears 13', 13" are substantially equivalent in terms of structure (taper) and of dimensions (characteristic diameters), and they both mesh with the planet gears 6', 6" defined above. Thus the rotation of the central pin 12, due to the rotation of the hypoid wheel 8, is accompanied by a rotation of the planet gears 6', 6" which in their turn determine a rotation of the side gears 13', 13" namely a rotation of the driven shafts 9', 9". As shown in figure 1, the side gears 13', 13" are coaxial with the axis 101 of the drive axle assembly 1, each one of them being splined to its corresponding driven shaft 9', 9".

According to a possible embodiment, a device 11 for locking/unlocking the differential may advantageously be housed within the body 5, having a structure and a function per se known. Such device (indicated by a dashed line in figure 1) substantially has the function to avoid, when the vehicle is stationary and in case of a lack of grip, the slipping of the wheel without grip, which, with a normal differential, will withdraw torque from the wheel having grip which would thus remain still.

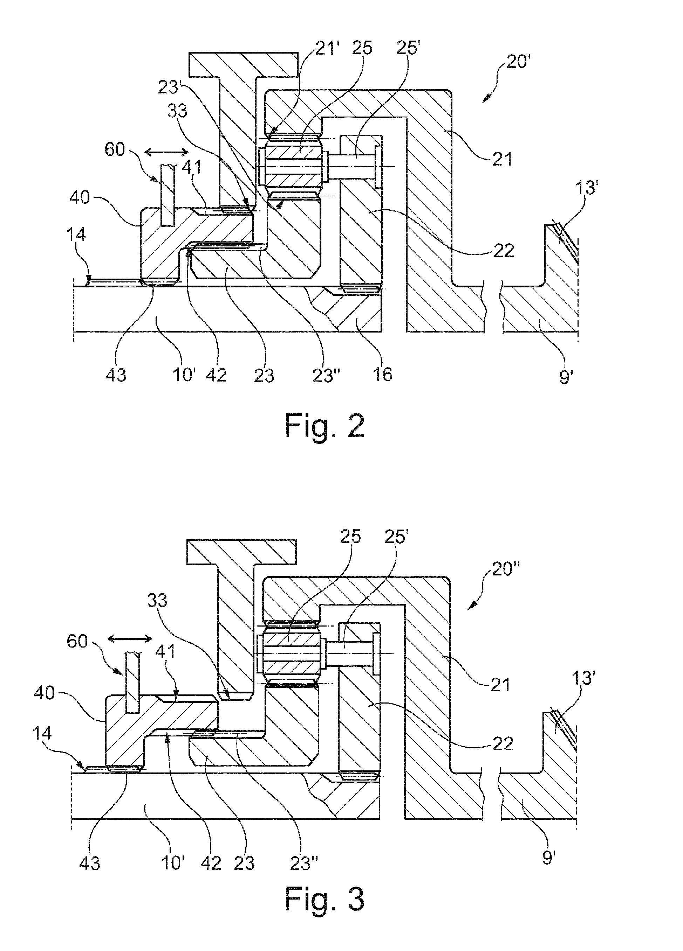

Figures 2 and 3 are schematic views relating to a first possible preferred embodiment of the first reduction gear 20' and of the second reduction gear 20" which are of the so-called "epicycloidal" type. In the following, the structure of such reduction gears is described with particular reference to the first reduction gear 20'. It should be intended that analogous considerations have to be considered as valid also for the second reduction gear 20" being structurally and functionally identical to the first reduction gear 20'.

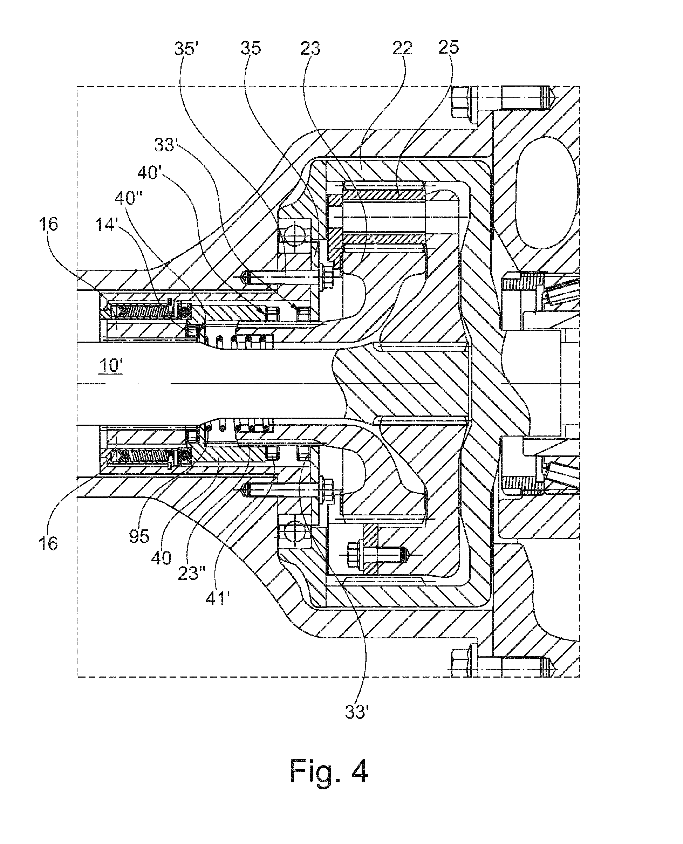

Thus with reference to figure 2, the first reduction gear 20' comprises a crown element 21 (in the following simply indicated as crown 21) integral with the first driven shaft 9' namely to the first side gear 13' of the differential 6. The crown 21 and the first driven shaft 9' are preferably made in a single piece (as shown also in the solution illustrated in figure 4 described in the following). The first reduction gear 20' comprises also a planet gear carrier element 22 (in the following indicated as "planet gear carrier 22") splined to the end of the first axle shaft 10'. The planet gear carrier 22 supports a plurality of planet gears 25, for example five. Each planet gear 25 is connected to the planet gear carrier by a connection pin 25' according to a principle per se known.

Each planet gear 25 meshes, at the same time, with the internal toothing 21' of the crown 21 and with the external toothed crown 23' of a sun wheel 23. The sun wheel 23 is coaxial with the first axle shaft 10' and keeps a fixed axial position (namely measured along the alignment axis 101 of the two axle shafts 10',10") with respect to the fixed structure that contains it (namely with respect to the first containment arm 30').

The first operating condition of the first reduction gear 20' (namely when the latter is actively inserted in the transmission) is determined when the sun gear 23 is integral with the first arm 30', namely with the fixed structure of the drive axle assembly 1. In this condition, as a result of the rotation of the crown 21, the planet gears 25 rotate on the external crown 23' of the sun wheel 23 driving the rotation of the planet gear carrier 22, namely of the first axle shaft 10' that is integral with it. The speed of rotation of the first axle shaft 10', thus, will be lower than the one of the crown 21, namely of the first driven element 9' of the differential, according to a reduction ratio that can be calculated, for example, by means of the formula:

$$\tau = (1+Zsunwheel)/Zcrown$$

wherein $\tau$ is the reduction ratio, Zsunwheel is the number of teeth of the sun wheel 23 and Zcrown is the number of teeth of the crown 21. In a preferred embodiment of the invention, the value of the reduction ratio is chosen to be equal to 1,6667 deriving from using a sun wheel whose Zsunwheel is equal to 64 and a crown 21 whose Zcrown is equal to 96.

The second operating condition of the first reduction gear 20' (namely when the latter is passively inserted in the transmission) is defined when the sun gear 23 is integral with the first axle shaft 10', namely with the planet gear carrier 22. In this condition the epicycloid reduction gear realizes a gear ratio equal to 1, namely no speed reduction is performed. In this condition, indeed, all the components of the first epicycloid reduction gear 20' (namely the crown 21, the planet gear carrier 22, the planet gear 25 and the sun wheel 23) rotate with the same angular speed around the axis 101 of the drive axle assembly.

With reference again to figures 2 and 3, according to a preferred embodiment of the invention, the switching means of the operating conditions of the reduction gears 20', 20" comprise, for each one of said reduction gears 20' ,20", a control element 40, 140 that can move from a first axial position (shown in figure 2), that is characteristic of an "activation" condition of the corresponding reduction gear 20', 20" and a second axial position, that is characteristic of a "deactivation" condition of the corresponding reduction gear 20', 20". Each control element 40, 140 acts on the sun wheel 23 of the corresponding reduction gear 20', 20". Considering for example a first control element 40 of the first reduction gear 20', when such element 40 occupies the first axial position, then it intervenes on the sun wheel 23 of the first reduction gear 20' constraining it to the fixed structure. When, on the contrary, the first control element 40 occupies the second axial position, then it acts on the sun wheel 23 in order to constrain the latter to the first axle shaft 10'. Analogous considerations can be done for a second control element 140 which acts on the sun wheel 23 of the second reduction gear 20".

The switching means of the operating condition of the reduction gears 20',20" comprise also, for each one of the control elements 40,140, activation means 60,160 suitable to move each control element between the first axial position and the second axial position defined above. In particular such means act simultaneously on both control elements 40,140 so that the latter occupy the same axial position at the same time. In this way the two reduction gears 20', 20" will always be in the same operating condition, namely they will be activated or deactivated simultaneously.

According to the invention, each control element 40,140 is formed by a sleeve coaxial with the first axle shaft 10'. In the following, each control element 40,140 will be indicated also by the expression "control sleeve 40,140". For the sake of simplicity, in the following the description will refer to the control element 40 of the first reduction gear 20'. The following considerations have to be considered as valid also for the second control element 140 of the second reduction gear 20".

The first sleeve-shaped control element 40 comprises at least a first coupling portion 41 suitable to couple with a fixed coupling portion 33 that is integral with the first containment arm 30' when the sleeve itself 40 occupies the first axial position. The sleeve 40 comprises also a second portion 42 coupled with a portion 23" of the sun wheel 23 in order to obtain an axially sliding coupling between the two elements (sleeve 40 and sun wheel 23). The expression "axially sliding" means a coupling condition such that the two portions 42 and 23" remain coupled also during the movement of the sleeve 40 from the first to the second axial position. In other words, even though the reciprocal axial position varies, the second portion 42 of the sleeve 40 and the portion 23" of the sun wheel 23" remain coupled before, after and during the axial movement of the sleeve 40. Thus the sleeve 40 always moves in an integral way with the sun wheel 23.

Again with reference to figures 2 and 3, the sleeve 40 comprises also a third coupling portion 43 which couples with a coupling portion 14 integral with the first axle shaft 10' when the sleeve occupies the second axial position (first reduction gear 20' disengaged).

Comparing figures 2 and 3, it is possible to see that, due to the effect of the activation means, the axial movement of the sleeve 40 from the first axial position (figure 2), to the second axial position (figure 3) determines the decoupling of the first portion 41 of the sleeve 40 from the fixed position 33 and the coupling of the third portion 43 of the sleeve 40 with the portion 14 integral with the first axle shaft 10'. Thus the sun wheel 23 is disconnected from the first arm 30' and is connected in an integral way with the first axle shaft 10'. As mentioned above, this is equivalent to the deactivation of the first reduction gear 20', namely to a transmission whose ratio is equal to 1.

As shown in figures 2 and 3, from the point of view of the construction, the first portion 41 of the sleeve 40 and the fixed coupling portion 33 may form a first axial dog clutch with radial teeth. Thus the first portion 41 and the fixed portion 33 are configured as axially sliding toothed crowns (respectively with internal toothing and external toothing). In the same way, also the second portion 42 of the sleeve 40 and the coupling portion 23" of the sun wheel 23 may form a second axial dog clutch with radial teeth. In this case, however, the second portion of the sleeve 40 will be preferably defined by a toothed crown with internal toothing, while the coupling portion 23" will be defined by a cylindrical toothed crown with external toothing. In this regard, the diameter of such external toothed crown will be smaller than the diameter of the external crown meshing with the planet gears 25.

Similarly to what described above, also the third portion 43 of the sleeve 40 and the coupling portion 10' integral with the first axle shaft 10' may form a third axial dog clutch with radial teeth. More precisely they can be configured respectively as an internal toothed crown and as an external toothed crown that can be axially coupled with each other by the axial translation of the sleeve 40.

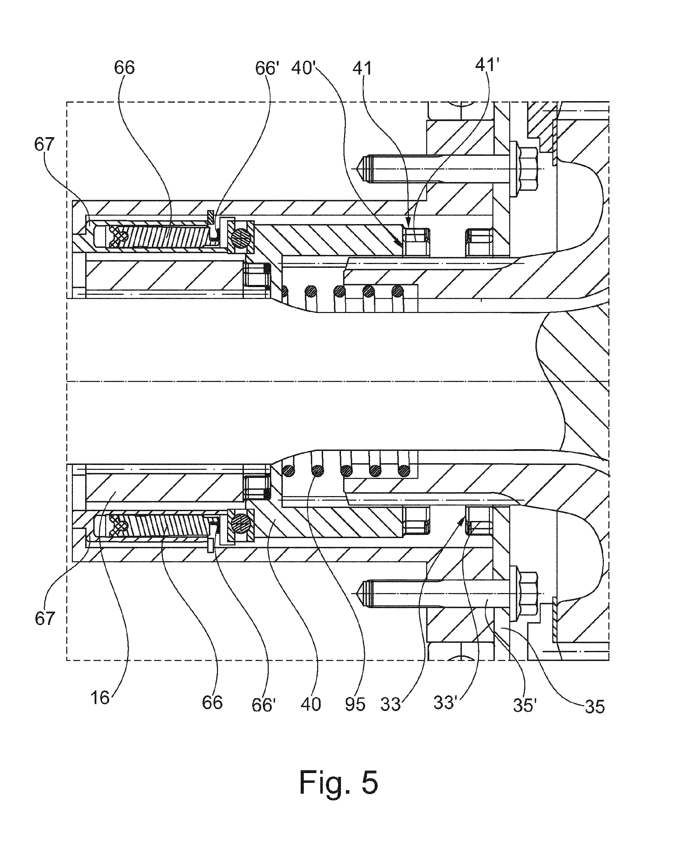

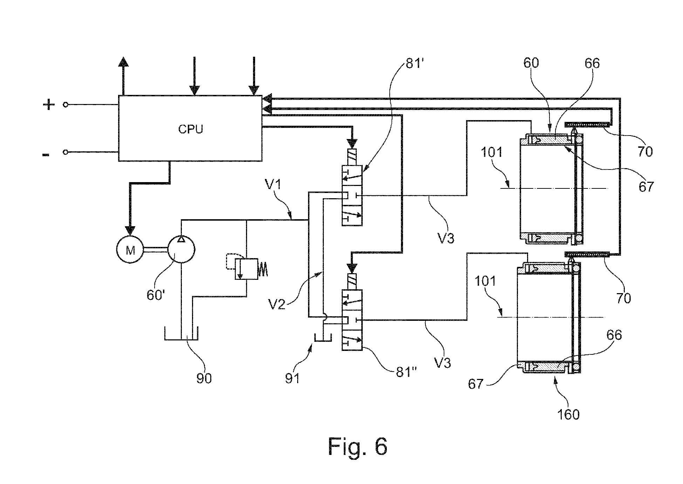

Figure 4 shows an enlarged view of the first reduction gear 20' of the drive axle assembly 1 of Figure 1 and allows to observe a preferred embodiment of the first epicycloidal reduction gear 20' and of the activation means of the first control element 40 of the reduction gear itself. Such activation gears are further shown in the enlarged view of Figure 5 and of the circuit scheme of figure 6 described below.

The solution shown in figures 4 and 5 is different from the solution schematized in figures 2 and 3 for a different configuration of the control element 40. In particular, in the solution in figures 4 and 5, the first portion 41 of the sleeve 40 and the fixed portion 33 define a first dog clutch having front teeth. According to this configuration, the first portion 41 is defined by a first series of teeth 41' which develop from a front surface 40' of the sleeve 40 in axial direction (namely in a way parallel to the transversal direction 101). Such teeth 41' are defined in order to couple with a second series of teeth 33' which define the fixed portion 33. The teeth of the second series are defined on a fixed part 35 that is integral with the first containment arm 30' by means of traditional connection means 35 (e.g. stud bolts). The teeth 41' of the first portion 41 and the teeth 33' of the fixed portion are defined in order to couple due to an axial sliding, namely due to the movement of the sleeve 40 from the second to the first operating position described above.

Analogously, in the solution in figures 4 and 5, also the third portion 43 of the sleeve 40 and the connection portion 14 integral with the first axle shaft 10' preferably define a dog clutch having front teeth. In this case, a first radial clutch connects in a stable and integral way a cylindrical body 16' on the first axle shaft 10', the front surface 16' of the cylindrical body 16 defining the coupling portion 14 of the first axle shaft 10'. Such portion 14 is defined by a series of teeth 14' which develop axially towards the sleeve 40. When the latter takes the second axial position defined above, such teeth 14' engage a corresponding series of teeth 43' defining the third portion 43 of the first sleeve 40. The latter develop from a second front surface 40" of the first sleeve 40 towards the cylindrical body 16.

In the embodiments shown in figures from 1 to 5, the control elements 40,140 thus contribute to the configuration of dog clutches having radial or front teeth. This requires that the reduction gears 20', 20" are switched when the vehicle is stationary or travels at low speed. It is possible, however, to allow an activation/deactivation of the reduction gears 20', 20" also when the vehicle is moving, for example by using appropriate clutch means as activation means of the control elements 40,140.

As indicated above, according to a preferred embodiment, the activation means of the control elements 40,140 are of the oleodynamic type and comprise a first oleodynamic actuator 60 and a second oleodynamic actuator 160 that are operatively connected to the first control element 40 of the first reduction gear 20' and to the second control element 140 of the second reduction gear 20", respectively. The activation means comprise also an oleodynamic circuit for controlling the oleodynamic actuators 60,160 in order to allow an actuation such that the control element 40,140 simultaneously reaches, depending on the cases, the first axial position or the second axial position defined above.

Each oleodynamic actuator 60,160 comprises an annular piston placed within a corresponding annular body 67 that is coaxial with a corresponding axle shaft. Figure 5, for example, shows the first oleodynamic actuator 60 whose annular body 67 is coaxial with the first axle shaft 10'. The annular body 67 of each actuator 60, 160 is connected to an oleodynamic circuit (shown in Figure 6) which allows it to be filled and to be drained. An operating end 66' of the piston 66 acts on the corresponding control element 40,140 in order to vary its axial position depending on whether an activation of the first reduction gear 20' is needed. As shown in Figure 5, for each control element 40,140, the activation means comprise also a repositioning spring 95 placed between the control element itself 40,140 and the sun wheel 23 of the corresponding reduction gear 20', 20". Such spring 95 has the function of bringing the control element 40,140 from the first axial position back to the second axial position when the pressure of the oil within the annular body 67 of the corresponding oleodynamic actuator ceases.

Figure 6 shows a view of a possible embodiment of an electrohydraulic activation circuit for activating the control elements 40,140. Such circuit comprises a first solenoid valve 81' intended to control the first actuator 60 of the first control element 40 of the first reduction gear 20'. A second solenoid valve 81", instead, is intended to control the second actuator 160 of the second control element 140 of the second reduction gear 20".

The two valves 81', 81" are electrically connected to a control unit CPU which controls their functioning. The two valves 81', 81" are preferably of the three-position three-way type. For each valve 81', 81", a first supply way V1 is connected to an oil supply tank 90 by means of an oleodynamic pump 60' driven by the electric motor M activated/deactivated by the control unit CPU. A second "discharge" way V2 is connected to a discharge tank 91, while a third delivery way V3 connects each solenoid valve 81',81" to the corresponding oleodynamic actuator 60,160 and in particular to the corresponding annular cylinder 67.

Thus the valves are suitable:

- (V3->V1) in a first position to connect the electrodynamic actuators with the discharge tank 91 and to stop the oil supply to the oleodynamic pump 61';
- (V1->V2) in a second position to connect the oil supply for the oleodynamic pump 61' with the discharge tank 91 and to stop the delivery way V3 to the oleodynamic actuators 60,160;
- (V1->V3) in a third position to connect the oil supply for the oleodynamic pump 61' with the delivery way V3 to the oleodynamic actuators 60,160 and to stop the discharge way V2.

The activation means of the control elements 40,140 may comprise also, for each actuator 60,160, a position sensor 70 in order to detect the axial position reached by the corresponding piston 66. Such sensor 70, if present, is electrically connected to the control unit CPU in order to send at least a first end-of-stroke electric signal when the corresponding control element 40,140 reaches the first axial position.

In Figure 6 the two solenoid valves 81',81" are shown in a position corresponding to a deactivation condition of the reduction gears 20',20" wherein each control element 40,140 occupies the position shown in figures 4 and 5. When it is necessary to reactivate the reduction gears 20',20", following an activation command in input to the control unit CPU 90, each solenoid valve 81', 81" is switched so that the first supply way V1 is connected to the third delivery way V3.

(V1->V3). At the same time, a command of the control unit CPU activates the motor M of the oleodynamic pump 60'. This increases the oil flow rate and thus also the pressure within the annular body 67 of each oleodynamic actuator 60,160 increases, in order to provoke the movement of the piston 66 which results in the movement of each control element 40,140 towards the first axial position. In the embodiment shown in figure 5, the movement of the piston 66 disengages each sleeve 40,140 from the cylindrical body 16 and after that engages the same sleeve 40,140 with the fixed portion 33 of the support structure.

For each oleodynamic actuator 60,160, when the stroke of the respective piston 66 is completed (corresponding to the sleeve 40 reaching the first axial position), the corresponding end-of-stroke sensor 70 sends a first end-of-stroke electric signal to the control unit CPU, after that the control unit itself deactivates the motor M of the oleodynamic pump 90' switching both solenoid valves 81',81" to the initial condition shown in figure 6. Thus the oil pressure within the annular bodies 67 of the actuator 60,160 is maintained in order to steadily keep the two control elements 40,140 in the first axial position.

When the need emerges to deactivate again the two reduction gears 20',20", due to a second manual activation command to the control unit CPU, each solenoid valve 81', 81" is switched so that the first supply way V1 is blocked and so that the third delivery way V3 is connected to the discharge tank 91 mentioned above. Thus the oil pressure in the actuators 60,160 ceases. In these conditions each control element 40,140 is subject to the action of the corresponding spring 95 that was previously compressed. The spring 95 pushes the corresponding control element 40,140 towards the second axial position, provoking the backward stroke of the piston 66 within the annular body 67 which provokes the draining of the body itself.

Also in this case when the backward stroke of the piston 66 is completed (corresponding to the respective sleeve 40,140 reaching the second axial position), the corresponding end-of-stroke sensor 70 sends a second end-of-stroke electric signal to the control unit CPU, after which the control unit itself deactivates the corresponding solenoid valves 81',81" bringing it back condition shown in figure 6.

The present invention relates also to a heavy industrial vehicle comprising at least a drive axle assembly according to what was mentioned above. As mentioned above, the presence of a drive axle assembly according to the invention allows the vehicle to be extremely efficient in both an on-road and an off-road usage. The activation of the two reduction gears 20',20" of the drive axle assembly 1, in fact, allows the vehicle to reach a performance comparable to the ones currently offered by specially provided vehicles for off-road applications. The deactivation of the two reduction gears 20',20", on the contrary, allows the vehicle to reach speed and fuel consumptions comparable to the ones of the vehicle designed for on-road applications.

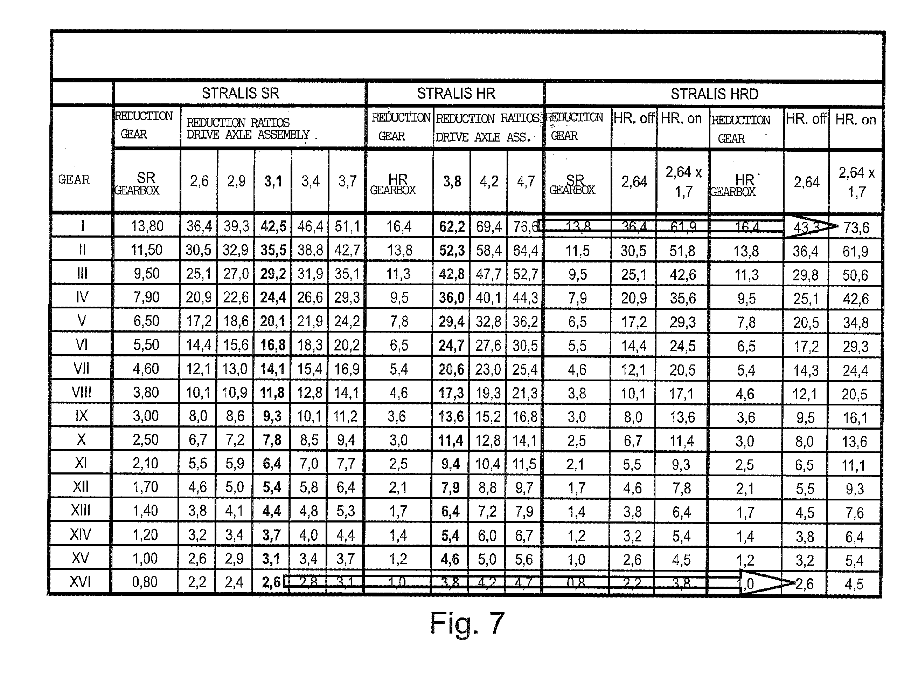

In this regard, the comparative table shown in figure 7 allows to appreciate the effectiveness and the functional versatility offered by the drive axle assembly 1. Such table allows to compare two vehicles among the industrial vehicles of the STRALIS® gamma (called in the following "STRALIS SR" and "STRALIS HR") and a possible model of the same gamma (called "STRALIS HRD") comprising a drive axle assembly 1 according to the invention. The model called STRALIS SR is a model designed and used for ON-ROAD applications. Such vehicle comprises sixteen gears (indicated in the table by numbers from I to XVI) and thus sixteen possible reduction gears at the gear box (called SR gearbox). For such model five possible "reduction ratios to the drive axle assembly" are provided (2,6-2,9-3,1-3,4-3,7) each one of them developed by a bevel gear pair formed by the hypoid wheel and by the pinion. The table in figure 7 thus provides, for each gear and for each possible reduction ratio at the drive axle assembly, the values of the gear ratios that are developed as a whole by the vehicle transmission from the engine to the driving wheels.

The STRALIS HR model, on the contrary, is a high performance vehicle for OFF-ROAD applications. Such vehicle comprises a drive axle assembly comprising two reduction gears, each one of them mounted at the end of an axle shaft in correspondence of the driving wheels. Also such vehicle comprises sixteen gears, each one of them identified by a reduction ratio at the gearbox (called HR gearbox). In particular, the reductions at the gearbox of this model have higher values than the ones of the gears of the STRALIS SR model. For the STRALIS HR model, three possible reductions at the drive axle assembly (3,8-4,2-4,7) are possible, developed by the crown wheel and pinion at the input of the differential and by the two reduction gears of the driving gears. Also for the STRALIS HR model the table 7 provides, for each gear and for each possible reduction ratio at the drive axle assembly, the values of the (reduction) gear ratios that are developed as a whole by the transmission from the gearbox to the driving wheels.

The table in figure 7 also shows the gear rations that can be obtained by the STRALIS HRD model which is different from the other ones, since it comprises a drive axle assembly according to the solution shown in figures 1, 4 and 5. The model STRALIS HRD is provided with possible gearbox configuration (indicated by HR gearbox) corresponding to the one of the model STRALIS SR and to an alternative configuration (indicated by SR gearbox) corresponding to the one of the model STRALIS HR. The STRALIS HRD model comprises a reduction gear at the drive axle assembly (developed by the hypoid wheel 8 and by the pinion 7) equal to 2.64, while the reduction gears 20',20" of the drive axle assembly 1 generate, when they are activated, a gear ratio, namely a speed reduction, equal to 1.7.

The HR-OFF column of the table in figure 7 shows the overall gear ratio values (namely from the gearbox to the driving wheels) that can be obtained by means of the 16 gears of the gearbox SR and of the gearbox HR when the two reduction gears 20', 20" are deactivated, while the column HR-OFF shows the values of the gear ratios that can be obtained when the reduction gears 20',20" are activated.

By examining this table, it can be observed that the values of the overall gear ratio obtained by the model STRALIS HRD, when the reduction gears 20',20" of the drive axle assembly 1 are inserted, are substantially aligned with the ones that can be obtained by the STRALIS HR model whose performance in terms of traction are higher, namely the one having a reduction at the drive axle assembly equal to 4,7. This means that the providing the gearbox 2 (already used in the STRALIS HR model) and activating the two reduction gears 20',20" it is possible to obtain a vehicle having the same performance as an off-road vehicle.

From the same table it is possible to observe that, always using the gearbox 2, the gear ratios obtained at the drive axle assembly 1 of the model STRALIS HRD, when the two reduction gears 20',20" of the drive axle assembly are deactivated (namely when only the crown wheel and pinion upstream of the differential acts), are substantially aligned with the ones that can be obtained by a STRALIS SR model, providing a good performance in terms of speed and fuel consumption. This means that the providing the gearbox 2 already used in the STRALIS HR model and deactivating the two reduction gears 20', 20" it is possible to obtain a vehicle having the same performance as an on-road vehicle.

On the basis of these considerations, it is thus evident that the drive axle assembly according to the invention allows to fulfil the purposes set forth above. In particular the drive axle assembly allows to obtain an extremely versatile vehicle, which optimal performance in any application.

The drive axle assembly according to the invention, can be subjected to numerous variations or modification, without departing from the scope of the invention; moreover all the details may be replaced by other technically equivalent details.

In practice, the materials used and also the dimensions and the shapes may be any, according to the needs and to the state of the art.

## Claims

1. A drive axle assembly (1) for a heavy industrial vehicle, said unit comprising:

   - a support structure comprising a central body (5);
   - a differential assembly (6) housed in said central body (5), said differential assembly (6) comprising a driving element (8), at least a first driven shaft (9') and at least a second driven shaft (9");
   - a first axle shaft (10') and a second axle shaft (10") aligned along a transversal direction (101);

   **characterized in that** it comprises:

   - a first reduction gear (20') placed between said first driven shaft (9') and said first axle shaft (10') and a second reduction gear (20") placed between said second driven shaft (9") and said second axle shaft (10"), said reduction gears (20,20") being suitable to take a first operating condition wherein the speed of the corresponding axle shaft (10',10") is lower than the speed of the corresponding driven shaft (9',9") according to a first predetermined gear ratio and a second operating condition wherein the speed of the corresponding axle shaft (10',10") is higher than or equal to the one of the corresponding driven shaft (9',9") according to a second predetermined gear ratio;
   - switching means of the operating condition of said reduction gears (20',20") in order to switch the operating condition of said reduction gears (20',20") from said first operating condition to said second operating condition and vice versa.

2. A drive axle assembly (1) according to claim 1, wherein the second operating condition of said reduction gears (20',20") is such that the speed of rotation of the corresponding axle shaft (10',10") is higher than or equal to the one of the corresponding driven shaft (9', 9") of said differential (6).

3. A drive axle assembly (1) according to claims 1 and 2, wherein the drive axle assembly (1) comprises a first containment arm (30') connected to a first side of the central body (5) and a second containment arm (30") connected to a second side of the central body (5) opposite to said first side, said first arm (30') housing said first axle shaft (10') and said first reduction gear (20'), said second arm (30") housing said second axle shaft (10") and said second reduction gear (20").

4. A drive axle assembly (1) according to one or more of the claims from 1 to 3, wherein said differential assembly (6) comprises a hypoid wheel (8) coaxial with said axle shafts (10',10"), said drive axle assembly (1) comprising a pinion (7) operatively connecting to an engine of said industrial vehicle.

5. A drive axle assembly (1) according to claim 4, wherein said differential assembly (6) comprises:

   - a first side gear (13') integral with said first driven shaft (9') and a second side gear (13") integral with said second driven shaft (9"),
   - a first planet gear (6') and a second planet gear (6") both being splined on a central pin (12) integral with said hypoid wheel (8), each one of said planet gears (6',6") meshing with each one of said side gears (13', 13") .

6. A drive axle assembly (1) according to any of the claims from 1 to 5, wherein said first reduction gear (20') and said second reduction gear (20") are of the epicycloidal type comprising:

   - a crown element (21) integral with a corresponding driven shaft (9',9"), said crown element (21) defining an internal toothed crown (21');
   - a planet gear carrier element (22) splined to one end (16) of a corresponding axle shaft (10', 10"), said planet gear carrier element (22) supporting a plurality of planet gears (25);
   - a sun wheel (23) integral with a corresponding axle shaft (10',10"), said sun wheel defining an external toothed crown (23')
   wherein said planet gear carrier element (22) supports a plurality of planet gears (25) each one of them simultaneously meshes with said internal toothed crown (21') of said crown element (21) and said external toothed crown (23') of said sun wheel (23).

7. A drive axle assembly (1) according to claim 6, wherein said means for switching the operating condition of said reduction gears (20',20") comprise for each one of said reduction gears (20',20") a control element (40,140) that can move between a first axial position and a second axial position that are characteristic respectively of said first operating condition and of said second operating condition of said reduction gears (20',20"), each control element (40,140) intervening on said sun wheel (23) of one corresponding reduction gear (20',20") in order to constrain said sun wheel (23) to said fixed structure when said control element (40,140) occupies said first position and in order to constrain said sun wheel (23) to a corresponding axle shaft (10',10") when said control element (40,240) occupies said second axial position.

8. A drive axle assembly (1) according to claim 7, wherein said switching means comprise, for each one of said control elements (40,140), activation means (60,160) suitable to move said control elements (40,140) between said first axial position and said second axial position.

9. A drive axle assembly (1) according to claim 8, wherein each one of said control elements (40,140) is configured as a sleeve coaxial with one corresponding axle shaft (10',10"), said control element (40,140) comprising:

    - a first coupling portion (41) suitable to couple with a fixed coupling portion (33) integral with said support structure;
    - a second portion (42) coupled with a portion (23") of the sun wheel (23) in order to obtain an axially sliding coupling between said control element (40,140) and said sun wheel (23);
    - a third coupling portion (43) suitable to couple with a coupling portion (14) integral with a corresponding axle shaft (10',10") when said control element (40,140) occupies said second axial position.

10. Drive axle assembly (1) according to claim 9, wherein said first coupling portion (41) and said fixed coupling portion (33) define a dog clutch having radial or front teeth.

11. Drive axle assembly (1) according to claim 9, wherein said second coupling portion (42) and said coupling portion (23') of the sun wheel (23) define a dog clutch having radial or front teeth.

12. Drive axle assembly (1) according to claim 9, wherein said third coupling portion (43) of said control element (40) and said coupling portion (14) integral with a corresponding axle shaft (10',10") define a dog clutch having radial or front teeth.

13. A drive axle assembly (1) according to claim 9, wherein said activation means comprise:

    - a first oleodynamic actuator (60) and a second oleodynamic actuator (160) operatively connected to respectively said control element (40) of said first reduction gear (20') and to said control element (140) of said second reduction gear (20").
    - an oleodynamic circuit for controlling said oleodynamic actuators (60,160) in order to allow an activation so that said control elements (40,140) simultaneously reach one of said axial positions.

14. A drive axle assembly (1) according to claim 13, wherein each one of said oleodynamic actuators (60,160) comprises an annular piston (66) placed within an annular body (67) connected to said oleodynamic circuit, an operating end (66') of the piston (66) acting on said control element in order to vary its axial position.

15. Industrial vehicle **characterized in that** it comprises one or more drive axle assemblies (1) according to any of the claims from 1 to 14.

Fig. 1

Fig. 2

Fig. 3

Fig. 4

Fig. 5

Fig. 6

| GEAR | STRALIS SR | | | | | | STRALIS HR | | | | STRALIS HRD | | | | | |
|---|---|---|---|---|---|---|---|---|---|---|---|---|---|---|---|---|
| | REDUCTION GEAR | REDUCTION RATIOS DRIVE AXLE ASSEMBLY | | | | | REDUCTION GEAR | REDUCTION RATIOS DRIVE AXLE ASS. | | | REDUCTION GEAR | HR. off | HR. on | REDUCTION GEAR | HR. off | HR. on |
| | SR GEARBOX | 2,6 | 2,9 | 3,1 | 3,4 | 3,7 | HR GEARBOX | 3,8 | 4,2 | 4,7 | SR GEARBOX | 2,64 | 2,64 x 1,7 | HR GEARBOX | 2,64 | 2,64 x 1,7 |
| I | 13,80 | 36,4 | 39,3 | 42,5 | 46,4 | 51,1 | 16,4 | 62,2 | 69,4 | 76,6 | 13,8 | 36,4 | 61,9 | 16,4 | 43,3 | 73,6 |
| II | 11,50 | 30,5 | 32,9 | 35,5 | 38,8 | 42,7 | 13,8 | 52,3 | 58,4 | 64,4 | 11,5 | 30,5 | 51,8 | 13,8 | 36,4 | 61,9 |
| III | 9,50 | 25,1 | 27,0 | 29,2 | 31,9 | 35,1 | 11,3 | 42,8 | 47,7 | 52,7 | 9,5 | 25,1 | 42,6 | 11,3 | 29,8 | 50,6 |
| IV | 7,90 | 20,9 | 22,6 | 24,4 | 26,6 | 29,3 | 9,5 | 36,0 | 40,1 | 44,3 | 7,9 | 20,9 | 35,6 | 9,5 | 25,1 | 42,6 |
| V | 6,50 | 17,2 | 18,6 | 20,1 | 21,9 | 24,2 | 7,8 | 29,4 | 32,8 | 36,2 | 6,5 | 17,2 | 29,3 | 7,8 | 20,5 | 34,8 |
| VI | 5,50 | 14,4 | 15,6 | 16,8 | 18,3 | 20,2 | 6,5 | 24,7 | 27,6 | 30,5 | 5,5 | 14,4 | 24,5 | 6,5 | 17,2 | 29,3 |
| VII | 4,60 | 12,1 | 13,0 | 14,1 | 15,4 | 16,9 | 5,4 | 20,6 | 23,0 | 25,4 | 4,6 | 12,1 | 20,5 | 5,4 | 14,3 | 24,4 |
| VIII | 3,80 | 10,1 | 10,9 | 11,8 | 12,8 | 14,1 | 4,6 | 17,3 | 19,3 | 21,3 | 3,8 | 10,1 | 17,1 | 4,6 | 12,1 | 20,5 |
| IX | 3,00 | 8,0 | 8,6 | 9,3 | 10,1 | 11,2 | 3,6 | 13,6 | 15,2 | 16,8 | 3,0 | 8,0 | 13,6 | 3,6 | 9,5 | 16,1 |
| X | 2,50 | 6,7 | 7,2 | 7,8 | 8,5 | 9,4 | 3,0 | 11,4 | 12,8 | 14,1 | 2,5 | 6,7 | 11,4 | 3,0 | 8,0 | 13,6 |
| XI | 2,10 | 5,5 | 5,9 | 6,4 | 7,0 | 7,7 | 2,5 | 9,4 | 10,4 | 11,5 | 2,1 | 5,5 | 9,3 | 2,5 | 6,5 | 11,1 |
| XII | 1,70 | 4,6 | 5,0 | 5,4 | 5,8 | 6,4 | 2,1 | 7,9 | 8,8 | 9,7 | 1,7 | 4,6 | 7,8 | 2,1 | 5,5 | 9,3 |
| XIII | 1,40 | 3,8 | 4,1 | 4,4 | 4,8 | 5,3 | 1,7 | 6,4 | 7,2 | 7,9 | 1,4 | 3,8 | 6,4 | 1,7 | 4,5 | 7,6 |
| XIV | 1,20 | 3,2 | 3,4 | 3,7 | 4,0 | 4,4 | 1,4 | 5,4 | 6,0 | 6,7 | 1,2 | 3,2 | 5,4 | 1,4 | 3,8 | 6,4 |
| XV | 1,00 | 2,6 | 2,9 | 3,1 | 3,4 | 3,7 | 1,2 | 4,6 | 5,0 | 5,6 | 1,0 | 2,6 | 4,5 | 1,2 | 3,2 | 5,4 |
| XVI | 0,80 | 2,2 | 2,4 | 2,6 | 2,8 | 3,1 | 1,0 | 3,8 | 4,2 | 4,7 | 0,8 | 2,2 | 3,8 | 1,0 | 2,6 | 4,5 |

Fig. 7

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 964 956 A (LINCOLN NEIL S) 3 July 1934 (1934-07-03) * page 4, lines 60-130; figures 1-3 * | 1-15 | INV. B60K17/16 F16D11/14 F16H3/64 |
| X | GB 2 193 274 A (EATON CORP EATON CORP [US]) 3 February 1988 (1988-02-03) | 1,15 | |
| A | * page 2, lines 113-120 * * page 3, lines 27-30 * * figure 1 * | 2-14 | |
| A | US 2009/283381 A1 (RASZKOWSKI JAMES A [US]) 19 November 2009 (2009-11-19) * paragraph [0027]; figures * | 13,14 | |

TECHNICAL FIELDS
SEARCHED (IPC)

B60K
F16D
F16H

The present search report has been drawn up for all claims

| Place of search | Date of completion of the search | Examiner |
|---|---|---|
| Munich | 23 July 2012 | Meritano, Luciano |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**                    EP 12 15 3031

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2012

| Patent document cited in search report | | Publication date | Patent family member(s) | | Publication date |
|---|---|---|---|---|---|
| US 1964956 | A | 03-07-1934 | NONE | | |
| GB 2193274 | A | 03-02-1988 | AR | 240960 A1 | 27-03-1991 |
| | | | BR | 8703748 A | 29-03-1988 |
| | | | ES | 2007672 A6 | 01-07-1989 |
| | | | GB | 2193274 A | 03-02-1988 |
| | | | MX | 168973 B | 16-06-1993 |
| US 2009283381 | A1 | 19-11-2009 | DE | 102009020229 A1 | 24-12-2009 |
| | | | US | 2009283381 A1 | 19-11-2009 |

EPO FORM P0459